# FASCICULE DE BREVET EUROPEEN

(11) **EP 1 274 106 B1**
(45) Date de publication et mention de la délivrance du brevet: **02.11.2005**
(21) Numéro de dépôt: 02291431.1
(22) Date de dépôt: 10.06.2002
(51) Int. Cl.: H01G 9/00, H02H 7/16

(54) **Procédé et dispositif d'équilibrage de supercapacité**
Ausgleichsverfahren und -vorrichtung für einen Superkondensator
Supercapacity balancing method and device

(30) Priorité: 18.06.2001 FR 0107959
(43) Date de publication de la demande: 08.01.2003
(73) Titulaire: Saft Finance S.à.r.l., 1471 Luxembourg (LU)
(72) Inventeur: Desprez, Philippe, 33290 Blanquefort (FR); Barrailh, Gérard, 33170 Gradignan (FR); Rochard, Damien, 86000 Poitiers (FR); Rael, Stéphane, 54000 Nancy (FR); Sharif, Fadi, 54550 Maizières (FR); Davat, Bernard, 54000 Nancy (FR)
(74) Mandataire: Pochart, François

(56) Documents cités:
- EP-A- 0 851 445
- US-A- 5 063 340
- US-A- 5 528 121
- US-A- 5 545 933
- US-A- 5 726 552
- BONERT R ET AL: "SUPER-CAPACITORS FOR PEAK LOAD SHAVING OF BATTERIES" EPE '97. 7TH. EUROPEAN CONFERENCE ON POWER ELECTRONICS AND APPLICATIONS. TRONDHEIM, SEPT. 8 - 10, 1997, EPE. EUROPEAN CONFERENCE ON POWER ELECTRONICS AND APPLICATIONS, BRUSSELS, EPE ASSOCIATION, B, vol. 1 CONF. 7, 8 septembre 1997 (1997-09-08), pages 1055-1060, XP000769079 ISBN: 90-75815-02-6

## Description

La présente invention concerne un procédé et un dispositif d'équilibrage de supercapacité, c'est-à-dire d'une ou de plusieurs supercapacités.

Les supercapacités sont des dispositifs connus et en cours de développement à l'heure actuelle comme sources d'énergie dans les applications de forte puissance telles que notamment le démarrage de moteurs, l'appoint de puissance des moteurs de véhicules hybrides, les alimentations sans interruption. Dans ce type d'applications, il est nécessaire de disposer de sources d'énergie susceptibles de se recharger rapidement et de réaliser de très nombreux cycles, ce qui est le cas des supercapacités contrairement aux batteries traditionnelles.

Les supercapacités sont capables de délivrer des puissances spécifiques très importantes sur des durées courtes. En effet, la durée de décharge (ou de charge) caractéristique d'une supercapacité est de l'ordre de quelques secondes à quelques dizaines de secondes, durée pendant laquelle des puissances spécifiques supérieures au kW/kg peuvent être délivrées. Les supercapacités ont individuellement des capacités ayant des valeurs allant du Farad à environ 3500 F, et des résistances très faibles, inférieures au mΩ pour les éléments de plus forte capacité.

Lors de la charge de ces supercapacités, il est important de ne pas dépasser une tension maximale aux bornes de la supercapacité. Ainsi, il est connu de contrôler la charge d'une supercapacité de manière à l'arrêter lorsque la tension à ses bornes atteint une valeur prédéterminée. En effet, lorsque la tension dépasse cette valeur prédéterminée, le vieillissement de la supercapacité se trouve accéléré, ce qui en réduit l'autonomie et la puissance.

Par ailleurs, on utilise en général plusieurs supercapacités connectées en série pour former un module de supercapacités. Les applications mentionnées ci-dessus requièrent généralement des tensions supérieures à quelques dizaines de volts, voire quelques centaines de volts. Dans ce cas, en fin de charge du module de supercapacités, on observe une dispersion des caractéristiques des supercapacités les unes par rapport aux autres, notamment pour ce qui est de la tension aux bornes des supercapacités. Ceci est dû à une dispersion des propriétés intrinsèques (résistance série et capacité) de chacune des supercapacités au sein du module, au vieillissement des supercapacités et à un éventuel gradient de température au sein du module, dû à son environnement. Ceci conduit à des courants de fuite différents pour chacune des supercapacités du module et donc à des tensions en fin de charge différentes pour chacune des supercapacités.

Ce problème nuit au bon fonctionnement du module de supercapacités. En effet, il se peut que certaines des supercapacités du module atteignent des tensions supérieures à leur tension nominale de charge, ce qui détériore leurs caractéristiques et entraîne leur vieillissement prématuré. Ainsi, le module dans son ensemble ne peut fonctionner correctement.

Pour résoudre ce problème, le document EP-0 851 445 propose de connecter en parallèle aux bornes de chaque supercapacité d'un module de plusieurs supercapacités un circuit de dérivation (ou by-pass) comprenant en série une résistance et une diode Zener dont la caractéristique est telle que le courant dérivé dans cette dernière augmente fortement, suivant les caractéristiques des composants, à partir d'une valeur légèrement inférieure à la tension nominale de chacune des supercapacités.

Le principe général de l'équilibrage de supercapacité consiste à dériver en partie ou totalement le courant de charge de la supercapacité afin d'équilibrer la tension de fin de charge à une valeur prédéterminée.

La solution proposée dans le document précédent n'est cependant pas entièrement satisfaisante. En effet, dès que la tension atteint le seuil critique, qui est inférieur à la tension nominale de fin de charge de la supercapacité, le courant dans la supercapacité devient égal au courant du circuit de dérivation à la tension nominale de la supercapacité jusqu'à équilibrage de cette dernière. Ainsi, pour assurer un courant de fuite au niveau du circuit de dérivation inférieur au courant de fuite intrinsèque des éléments, le courant de dérivation devient très faible, par exemple de l'ordre de la dizaine de mA pour une supercapacité présentant un courant de fuite intrinsèque de l'ordre du mA, alors que le courant nécessaire pour terminer la charge de la supercapacité est élevé, de l'ordre de plusieurs dizaines d'Ampères. Ainsi, la fin de la charge de la supercapacité est très longue, alors que les supercapacités sont souvent destinées à être très sollicitées avec des cycles charge-décharge rapides.

En outre, l'utilisation de circuits de dérivation à fort courant de fuite est pénalisante en terme de consommation énergétique et de dissipation thermique additionnelle car un courant de maintien important est nécessaire pour conserver les supercapacités chargées.

De plus, en circuit ouvert, un courant de fuite du circuit de dérivation important qui conduit à une décharge de la supercapacité dans ce dernier et donc à une baisse rapide de la tension de la supercapacité.

La présente invention a donc pour but de mettre au point un procédé et un dispositif d'équilibrage de supercapacité qui améliore sensiblement la dynamique de fin de charge et qui permette d'obtenir des caractéristiques homogènes en termes de tension aux bornes des supercapacités.

Dans toute la suite, on parle d'équilibrage aussi bien pour une supercapacité seule (il s'agit plus dans ce cas d'un contrôle de la tension de charge de la supercapacité) que pour un module de supercapacités.

La présente invention propose à cet effet un procédé d'équilibrage de supercapacité comprenant la dérivation de l'intensité circulant dans ladite supercapacité à partir d'une tension prédéterminée, dite tension seuil, aux bornes de ladite supercapacité, l'intensité de dérivation étant une fonction de la tension aux bornes de ladite supercapacité qui croît continûment en fonction de ladite tension. Dans ce procédé selon l'invention ladite intensité de dérivation croît entre ladite tension de seuil, pour laquelle ladite intensité de dérivation est appelée intensité minimale de dérivation, et une tension dite de référence, pour laquelle ladite intensité de dérivation est appelée intensité nominale de dérivation, et la différence entre ladite tension de référence et ladite tension de seuil est inférieure à 200mV, et le rapport entre ladite intensité nominale de dérivation et ladite intensité minimale de dérivation est supérieur à 100.

Ainsi, grâce à l'invention, le courant de dérivation peut atteindre des valeurs importantes, ce qui assure une intensité de charge plus importante durant la fin de la charge et donc une diminution de la durée de la fin de charge, tout en conservant un courant de fuite au niveau de la supercapacité qui est de l'ordre du courant de fuite intrinsèque de cette dernière. Ceci est possible grâce au procédé de l'invention qui, contrairement à celui de l'art antérieur, utilise un circuit de dérivation dont la pente de la caractéristique courant-tension est suffisamment raide, c'est-à-dire en d'autres termes dont la différence entre courant de dérivation et courant de fuite est suffisamment importante sur la plage de dérivation du courant, pour assurer à la fois un courant de dérivation important et un faible courant de fuite.

De manière avantageuse, la croissance de l'intensité de dérivation en fonction de la tension aux bornes de la supercapacité peut être linéaire, de sorte que la diminution de l'intensité de charge (et l'augmentation de l'intensité de dérivation) est progressive.

De manière avantageuse encore, l'intensité de dérivation est bornée en fonction de la tension aux bornes de la supercapacité. Ceci préserve l'intégrité du système lorsque la tension aux bornes de la supercapacité dépasse de manière significative la tension de référence du circuit de dérivation.

On peut par exemple utiliser selon l'invention un transistor de type MOSFET, un transistor bipolaire ou un transistor IGBT pour la réalisation de l'amplificateur linéaire de puissance du circuit de dérivation mis en parallèle aux bornes de la supercapacité. La variété de ce type de composants permet de sélectionner celui qui a les caractéristiques souhaitées en termes de courant nominal de dérivation et de puissance dissipable.

De plus, l'association de l'un de ces composants avec un dispositif de régulation permet de fixer la tension minimale à partir de laquelle l'intensité de dérivation augmente et la tension maximale à partir de laquelle l'intensité de dérivation est limitée à une valeur constante, ainsi que la valeur de cette intensité maximale constante, afin de l'adapter aux caractéristiques (tension maximale aux bornes en fin de charge, courant de charge) de la supercapacité.

Un avantage supplémentaire de l'utilisation d'un transistor de type MOSFET ou de type bipolaire est le très faible courant de fuite de ce dernier (inférieur au µA).

Avantageusement, selon le mode de réalisation le plus simple de l'invention, la tension de référence peut être égale à la tension de fin de charge de la supercapacité.

Selon un mode de réalisation plus élaboré, la tension de seuil peut être est égale à la tension de fin de charge de la supercapacité. Ceci permet d'optimiser la charge, en utilisant des protocoles de charge qui sont indiqués ci-dessous.

Ainsi, selon une variante très avantageuse du procédé de la présente invention, ce dernier comprend en outre le contrôle de l'intensité de charge de la supercapacité en fonction de la tension aux bornes de la supercapacité par une fonction logique dite de détection de tension susceptible de passer d'un état dit activé à un état dit désactivé lorsque la tension aux bornes de la supercapacité dépasse la tension de référence, de sorte que l'intensité de charge de la supercapacité est diminuée, puis de repasser à l'état activé lorsque la tension aux bornes de la supercapacité devient inférieure à une tension dite minimale de contrôle.

Grâce à ce contrôle, la supercapacité n'est pas surchargée, et le temps de charge à faible intensité est diminué de sorte que le temps global de charge est optimisé. Ce contrôle permet de suivre un protocole de charge à deux niveaux de courant dans lequel l'intensité de charge peut atteindre un niveau supérieur à l'intensité nominale de dérivation, ce qui permet d'optimiser le temps de charge sans détériorer la supercapacité.

Ce contrôle est par exemple obtenu grâce à la fonction de détection de tension qui délivre un signal sous forme d'hystérésis.

Selon une autre variante très avantageuse du procédé de la présente invention, ce dernier comprend le contrôle de l'intensité de charge de la supercapacité en fonction de l'intensité de dérivation par une fonction logique dite de détection de courant susceptible de passer d'un état dit activé à un état dit désactivé lorsque l'intensité de dérivation devient supérieure à l'intensité nominale de dérivation, de sorte que l'intensité de charge de la supercapacité est alors diminuée, puis de repasser à l'état activé lorsque l'intensité de dérivation devient inférieure à une intensité dite minimale de contrôle. Ce contrôle permet également de suivre un protocole de charge à niveaux de courant multiples dans lequel l'intensité de charge de multiples plateaux peut être supérieure à l'intensité nominale de dérivation, ce qui permet d'optimiser le temps de charge sans détériorer la supercapacité.

Ceci permet notamment de faire décroître linéairement l'intensité de charge tout en maintenant un certain niveau de courant dérivé.

Ici encore, le contrôle est par exemple obtenu grâce à la fonction de détection de courant qui délivre un signal sous forme d'hystérésis.

Toujours selon l'invention, on peut associer le contrôle de tension et le contrôle de courant. Ceci permet, lors du contrôle de tension, de ne pas rester à l'état désactivé même lorsque l'intensité de dérivation est sensiblement nulle.

Enfin, l'invention concerne également un dispositif pour la mise en oeuvre du procédé précédent, comprenant notamment un transistor de type MOSFET, un transistor bipolaire ou un transistor IGBT au sein du circuit de dérivation.

Un module de supercapacités selon l'invention peut comprendre une pluralité de supercapacités montées en série, un circuit de dérivation étant monté en parallèle aux bornes de chacune des supercapacités, ou un circuit de dérivation unique étant monté en parallèle aux bornes de l'ensemble des supercapacités.

Un ensemble de tels modules peut être monté en série et/ou en parallèle avec un circuit de dérivation unique aux bornes de l'ensemble.

D'autres caractéristiques et avantages de la présente invention apparaîtront à la lecture de la description qui suit, donnée à titre illustratif et nullement limitatif.

Dans les figures suivantes :
- la figure 1 montre le schéma de principe d'un circuit de dérivation pour la mise en oeuvre du procédé selon l'invention sur une supercapacité élémentaire
- la figure 2 montre le schéma de principe d'un circuit d'équilibrage selon l'invention d'un module de plusieurs supercapacités telles que celle montrée en figure 1
- la figure 3 montre un exemple de courbe caractéristique de l'intensité de dérivation selon le procédé de l'invention en fonction de la tension aux bornes d'une supercapacité
- la figure 4 montre la tension aux bornes et l'intensité de dérivation des éléments d'un module de supercapacités équilibré selon un premier mode de réalisation de l'invention
- la figure 5 montre la courbe d'hystérésis de la fonction de détection de tension selon l'invention
- la figure 6 montre la tension aux bornes et l'intensité de charge d'un module de supercapacités équilibré selon un deuxième mode de réalisation de l'invention
- la figure 7 montre la courbe d'hystérésis de la fonction de détection de courant selon l'invention
- la figure 8 montre la tension aux bornes et l'intensité de charge d'un module de supercapacités équilibré selon un troisième mode de réalisation de l'invention.

Dans toutes ces figures, les éléments communs portent les mêmes numéros de référence.

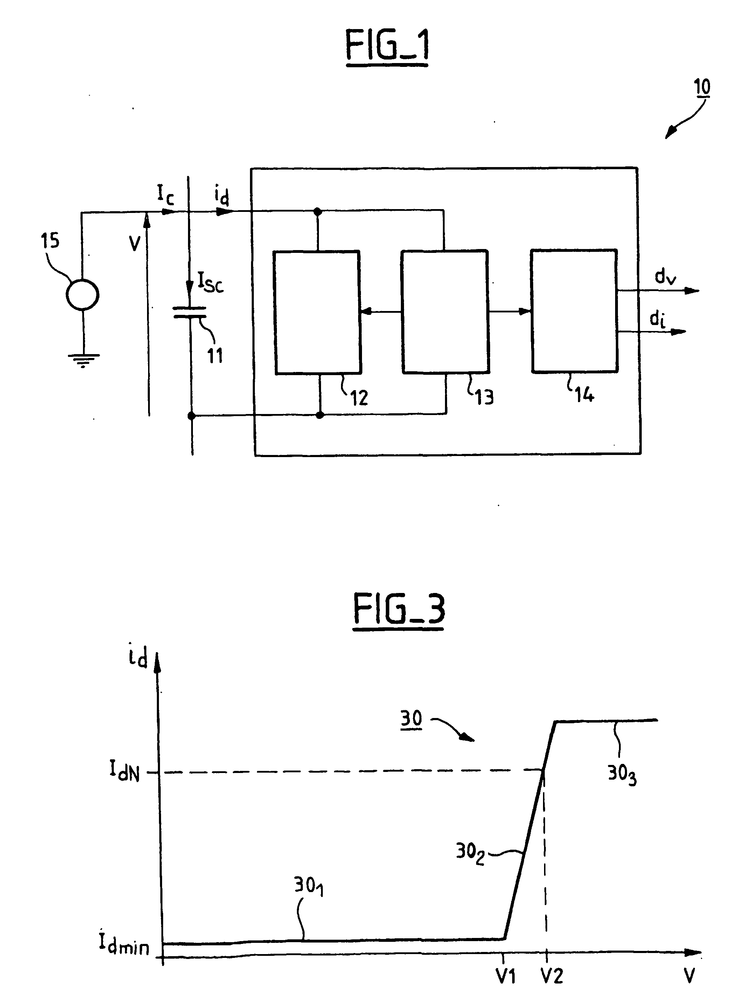

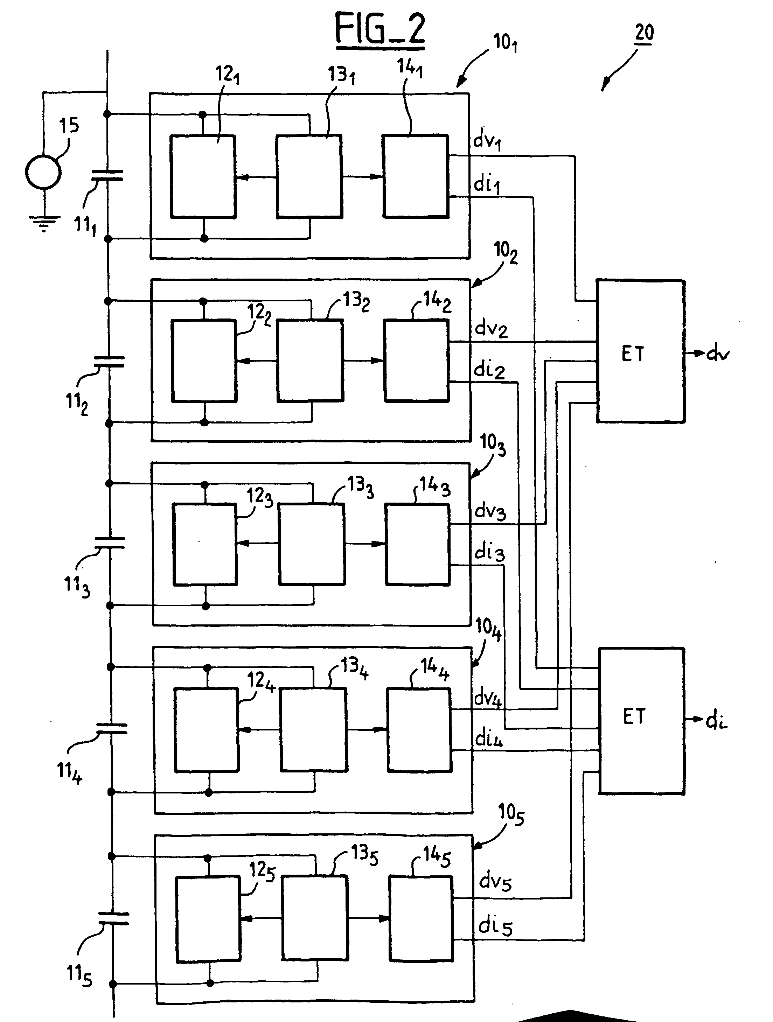

On voit en figure 1 un circuit 10 selon l'invention comprenant une supercapacité 11 aux bornes de laquelle est monté en parallèle un circuit 12 dit de dérivation selon l'invention, comprenant un amplificateur de puissance contrôlé en courant (non représenté). Un filtre passe-bas 13 est monté également en parallèle aux bornes de la supercapacité 11. Ce filtre passe-bas est rendu nécessaire en cas de découpage haute fréquence du courant de charge I_{C} générant des harmoniques de tension préjudiciables au bon fonctionnement du circuit de dérivation 12. Enfin, un organe de détection 14 relié au filtre 13 génère des signaux logiques dᵥ et dᵢ de gestion de charge dont l'interprétation par le chargeur 15 de la supercapacité 11 permet une charge sécurisée et rapide, tel que cela sera expliqué en détail plus loin.

La figure 2 montre un module de supercapacités 20 comprenant une pluralité (cinq dans l'exemple de la figure 2) de circuits 10₁ à 10₅ tel que celui de la figure 1. Chaque élément d'un circuit 10ₙ (n variant de 1 à 5 dans l'exemple de la figure 2) comprend les mêmes éléments que le circuit 10 de la figure 1, référencés avec le même numéro portant l'indice correspondant au rang de ce circuit dans le module 20. Le chargeur 15 est commun à toutes les supercapacités 11₁ à 11₅.

Selon l'invention, les sorties dᵥₙ de chaque organe de détection 14ₙ sont combinées pour générer une fonction logique 21 dite de détection de tension dont le signal de sortie dᵥ est envoyé au chargeur 15.

De même, les sorties diₙ de chaque organe de détection 14ₙ sont combinées pour générer une fonction logique 22 dite de détection de courant dont le signal de sortie dᵢ est envoyé au chargeur 15.

On va maintenant expliquer le fonctionnement du circuit de dérivation 12 (ou 12₁ à 12₅) selon l'invention, en relation avec les figures 1 et 3.

Dans un premier mode de réalisation, l'invention permet de réaliser le contrôle de la tension aux bornes d'une supercapacité 11, et de dériver, en cas de surcharge, tout ou partie du courant de charge I_{C} de la supercapacité 11 à laquelle le circuit de dérivation 12 est associé. Ainsi, pour une supercapacité seule (cas de la figure 1), l'invention assure le contrôle de la tension aux bornes de la supercapacité, et pour un module de supercapacités (cas de la figure 2), l'invention assure le contrôle et l'équilibrage de la tension aux bornes de chacune des supercapacités.

Le circuit de dérivation 12 comprend un amplificateur de puissance, tel que par exemple un transistor MOSFET dont le contrôle en courant permet de générer une courbe caractéristique continue, telle que celle montrée en figure 3, où la courbe 30 représente l'intensité i_{d} traversant le circuit de dérivation 12 en fonction de la tension V aux bornes de ce dernier. La courbe 30 présente trois portions :
- une portion 30₁ où i_{d} est une constante I_{dmin} (voisine de 0) appelée intensité minimale de dérivation (correspondant au courant de fuite du circuit de dérivation 12), en fonction de V jusqu'à une valeur V=V1 dite tension de seuil
- une portion 30₂ où i_{d} croît linéairement depuis la valeur I_{dmin} jusqu'à une valeur I_{dN} dite intensité nominale de dérivation pour une valeur V=V2 dite tension de référence
- une portion 30₃ où i_{d} est une constante, égale ou supérieure à I_{dN}, en fonction de V.

Dans ce mode de réalisation, la valeur V1 correspond à la tension de fin de charge de la supercapacité, par exemple 2,2 V, et la tension V2 est légèrement supérieure, par exemple égale à 2,25 V. On note que les valeurs de V1 et V2 sont réglables à loisir, de sorte que l'on peut aisément adapter le circuit de dérivation 12 à la supercapacité à contrôler.

Dans le premier mode de réalisation de l'invention, utilisant uniquement le circuit de dérivation 12, on effectue une charge à courant constant d'une supercapacité 11 ou d'un module 10 de supercapacités 11₁ à 11₅. Ainsi, le niveau du courant de charge I_{C} est prédéterminé à une valeur, par exemple 5A, et l'intensité nominale de dérivation I_{dN} est réglée à une valeur supérieure à I_{C}.

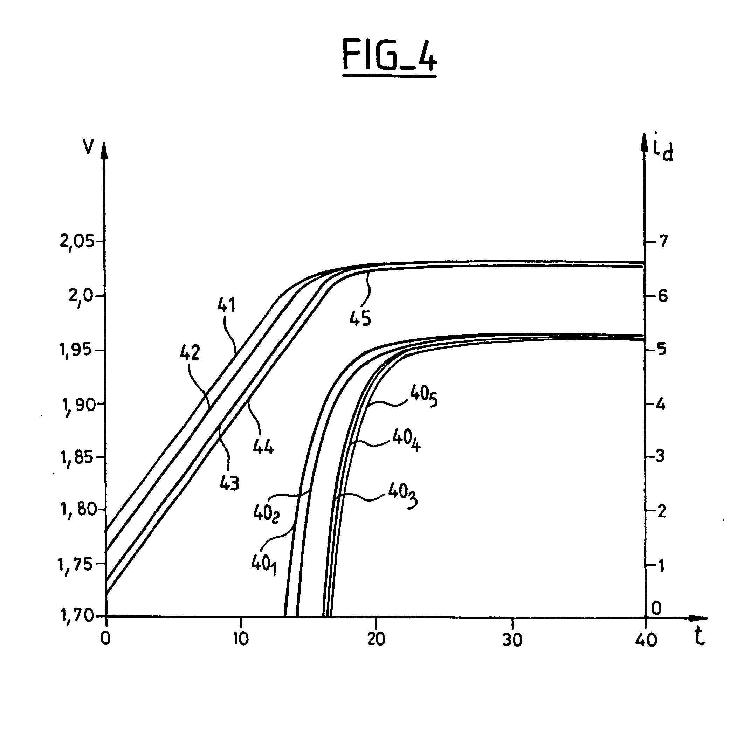

En figure 4, les courbes 41 à 45 représentent la tension V aux bornes de chacune des supercapacités 11₁ à 11₅ et les courbes 40₁ à 40₅ représentent l'intensité de dérivation id dans chacun des circuits de dérivation 12₁ à 12₅, en fonction du temps t. On voit sur cette figure que les supercapacités 11₁ à 11₅ sont initialement déséquilibrées, c'est-à-dire que les tensions à leurs bornes ne sont pas égales, et qu'en fin de charge, la tension de chacune des supercapacités 11₁ à 11₅ s'équilibre au voisinage de la tension de référence choisie dans ce cas pour correspondre à la tension de fin de charge des supercapacités.

Grâce à l'invention, on peut donc équilibrer le module 20 de supercapacités en fin de charge de manière rapide grâce au fait que l'intensité de dérivation en fonction de la tension présente une borne maximale.

Dans le mode de réalisation simple qui vient d'être expliqué, où les organes de détection 14ₙ (et les fonctions logiques de détection de tension 21 et de courant 22) ne sont pas utilisés, le courant maximal de charge est I_{dN} et la charge est effectuée à courant constant afin de prévenir toute surcharge des supercapacités.

Dans un deuxième mode de réalisation de l'invention, qui permet d'optimiser le niveau de charge et la durée de cette dernière, on effectue la charge à deux niveaux de courant, le premier pouvant être très supérieur à l'intensité de dérivation nominale I_{dN}, et le second devant être inférieur ou égal à l'intensité de dérivation nominale I_{dN}. On utilise dans ce cas les organes de détection 14ₙ et la fonction de détection de tension 21 (voir figure 2) dont la sortie dᵥ correspond au ET logique des sorties dv₁ à dv₅ des organes de détection 14₁ à 14₅, ; la tension de seuil des circuits de dérivation 12₁ à 12₅ est égale à la tension de fin de charge (par exemple 2 V) des supercapacités 11₁ à 11₅, et l'intensité de dérivation nominale I_{dN} vaut par exemple 10 A.

Par souci de simplification, on va expliquer le fonctionnement de l'invention dans ce cas sur une seule supercapacité, par exemple la supercapacité 11₁.

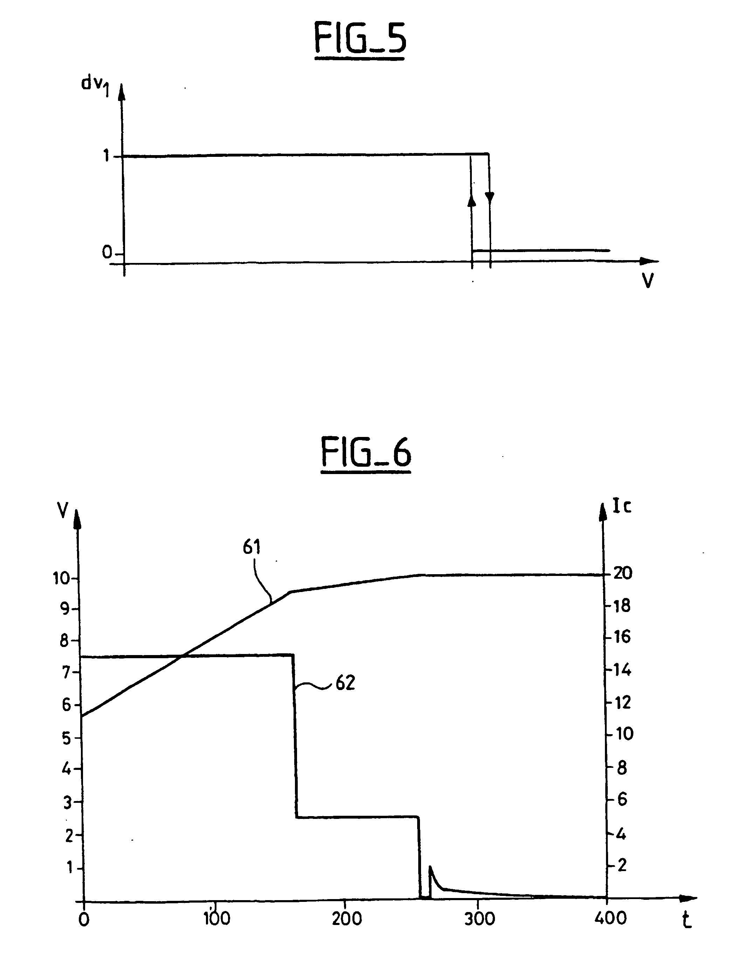

Le signal dᵥ₁ délivré par l'organe de détection 14₁ est une hystérésis illustrée en figure 5 où l'on voit la sortie dᵥ₁ en fonction de la tension aux bornes de la supercapacité 11₁. L'état activé (dᵥ=1) correspond à une valeur de V telle que le chargeur 15 délivre une intensité de charge supérieure à l'intensité de dérivation nominale I_{dN}, et l'état désactivé (dᵥ=0) correspond à une valeur de V telle que le chargeur délivre une intensité de charge inférieure ou égale à I_{dN}. Ainsi, la charge est effectuée en plusieurs phases illustrées sur la figure 6 où la courbe 61 représente la tension aux bornes du module 20 en fonction du temps t, et où la courbe 62 représente l'intensité de charge du module 20 en fonction du temps t également.
**Phase 1 : d**_{**v**} **= 1**
   La tension de la supercapacité croît jusqu'à 2 V, l'intensité de dérivation est sensiblement nulle et l'intensité de charge est de 15A, c'est-à-dire supérieure à I_{dN}.
**Phase 2 : d**_{**v**} **= 1**
   La tension de la supercapacité croît de 2V à 2 V + 50 mV, et l'intensité de dérivation croît donc de 0 à 10 A du fait de la caractéristique du circuit de dérivation 12₁ ; l'intensité de charge reste à 15 A. Compte tenu de la courbe d'hystérésis de la figure 5, dᵥ passe donc à 0.
**Phase 3 : d**_{**v**} **= 0**
   La tension de la supercapacité décroît de 2 V + 50 mV à 2 V + 25 mV, et l'intensité de dérivation décroît de 10 A à 5 A; l'intensité de charge passe à 5 A.
**Phase 4 : d**_{**v**} **= 0**
   La tension de la supercapacité est constante et égale à 2 V + 25 mV, l'intensité de dérivation est également constante et égale à 5 A et l'intensité de charge également constante et égale à 5 A.
**Phase 5 : d**_{**v**} **= 0**
   La tension de la supercapacité décroît de 2 V + 25 mV à 2 V, l'intensité de dérivation de 5 A à sensiblement 0.
   A partir d'une tension du module de 10 V, le chargeur 15 limite le courant de charge pour maintenir la tension du module constante.

Les modifications de l'intensité de charge sont obtenues grâce au chargeur 15 qui reçoit l'information dᵥ de l'organe de détection 14₁ (ou de la fonction de détection 21 dans le cas du module 20) et modifie en conséquence l'intensité de charge.

A noter que le décalage entre la tension de fin de charge de la supercapacité (2 V) et la valeur de V correspondant au passage de dᵥ de 1 à 0 selon l'hystérésis de la figure 5 (2,05 V) permet d'équilibrer le module sans réduire l'intensité de charge lorsque les supercapacités sont faiblement déséquilibrées.

On comprend aisément comment le procédé qui vient d'être décrit en relation avec une supercapacité s'applique mutatis mutandis au module de supercapacités 20. En effet, dès que la tension de l'une des supercapacités du module 20 dépasse la tension de seuil, la fonction de détection 21 est utilisée.

Grâce à ce protocole de charge utilisant l'organe de détection de tension 14, (ou la fonction de détection de tension 21 dans le cas du module 20), on peut donc effectuer la charge à un courant supérieur à I_{dN} et donc optimiser la durée de la charge, tout en sécurisant la fin de charge.

On peut cependant observer avec l'utilisation de cette seule fonction de détection, en particulier pour les forts courants de charge (pour lesquels les chutes ohmiques de tension sont importantes) qu'après détection d'une surcharge et réaction du chargeur 15, la fonction de détection de tension reste à l'état désactivé (dᵥ = 0) alors que l'intensité de dérivation est nulle ou sensiblement nulle. L'utilisation de la seule fonction de détection de tension conduit donc à un protocole de charge sécurisé et rapide, mais dont la durée de fin de charge peut encore être réduite.

Selon l'invention, on utilise alors dans ce cas, pour optimiser la dynamique de fin de charge, la fonction de détection de courant délivrant un signal dᵢ et dont on va à présent expliquer le fonctionnement dans le cadre du troisième mode de réalisation de l'invention. Le signal dᵢ correspond au ET logique des sorties dᵢ₁ à dᵢ₅ des organes de détection 14₁ à 14₅, ; la tension de seuil des circuits de dérivation 12₁ à 12₅ est égale à la tension de fin de charge (par exemple 2,4 V) des supercapacités 11₁ à 11₅, et l'intensité de dérivation nominale I_{dN} vaut par exemple 10 A.

Toujours par souci de simplification, on va expliquer le fonctionnement de l'invention dans ce cas sur une seule supercapacité, par exemple la supercapacité 11₁.

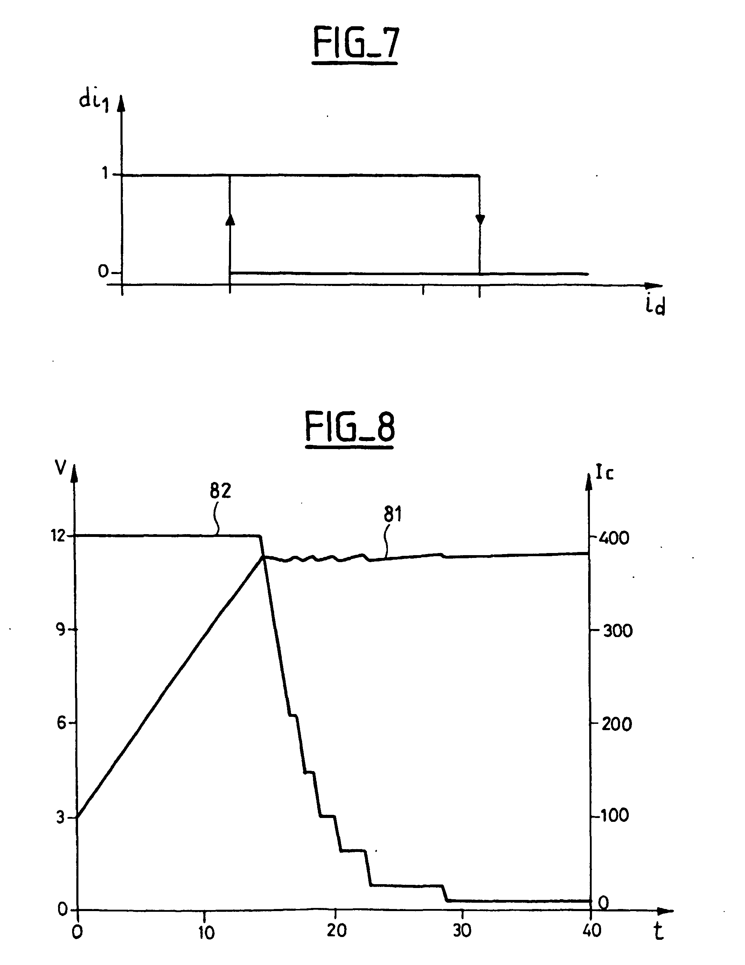

Le signal dᵢ₁ délivré par l'organe de détection de courant 14₁ est une hystérésis illustrée en figure 7 où l'on voit la sortie dᵢ₁ en fonction de l'intensité de dérivation i_{d}.

L'état activé (dᵢ=1) correspond à une valeur de V telle que le chargeur 15 délivre une intensité de charge constante et pouvant être très supérieure à l'intensité de dérivation nominale I_{dN}, et l'état désactivé (dᵢ=0) correspond à une valeur de V telle que le chargeur 15 délivre une intensité de charge continûment décroissante en fonction du temps. Ainsi, la charge est effectuée en plusieurs phases illustrées sur la figure 8 où la courbe 81 représente la tension aux bornes du module 20 en fonction du temps t, et où la courbe 82 représente l'intensité de charge du module 20 en fonction du temps t également.

Le fonctionnement est le suivant, I_{Cmax} étant l'intensité de charge maximale, I_{Cmin} l'intensité de charge minimale, inférieure à I_{dN} et di/dt la pente de l'intensité de charge.

Si dᵥ = 1, I_{C} = I_{Cmax}.

Si dᵥ = 0 et si dᵢ = 1, l'intensité de charge reste constante.

Si dᵥ = 0 et si dᵢ = 0, I_{C} = I_{C} - (di/dt)xt.

Dès que I_{C} est inférieur à I_{Cmin}, l'intensité de charge reste constante.

Ainsi, si dᵥ est à l'état désactivé, on fait décroître linéairement le courant de charge dans la limite de sa valeur minimale, avec une pente nulle si dᵢ est à l'état activé et non nulle sinon.

Si dᵥ est à l'état activé, on ré-initialise l'intensité de charge à sa valeur maximale.

Grâce à cette fonction de détection de courant, on obtient un protocole de charge élaboré dans lequel, en fin de charge, un certain niveau d'intensité de dérivation est maintenu, ce qui permet de s'affranchir en partie de l'erreur de mesure associée à l'existence de la composante ohmique liée à la résistance série de la supercapacité et proportionnelle à l'intensité de charge. En effet, l'information donnée par le signal dᵥ, détecteur de surtension, est de ce fait plus pessimiste que la réalité ce qui est préjudiciable à la rapidité de la charge. On accélère ainsi la charge de la supercapacité ou du module par rapport au mode de réalisation utilisant une charge à deux niveaux d'intensité seulement.

Bien entendu, les modes de réalisation qui viennent d'être décrits ont été donnés à titre purement illustratif.

Notamment, on a décrit le troisième mode de réalisation (fonction de détection de courant associée à la fonction de détection de tension) en relation avec l'utilisation du deuxième (fonction de détection de tension seule), mais il est bien évident que la fonction de détection de courant peut être utilisée seule en combinaison avec le circuit de dérivation selon l'invention et sans la fonction de détection de tension.

Par ailleurs, tous les exemples de dimensionnement présentés l'ont été pour illustrer le fonctionnement du procédé selon l'invention, et les valeurs qu'ils comportent ne sont absolument pas limitatives.

En outre, l'invention, dans tous ses modes de réalisation, s'applique aussi bien au contrôle de la charge d'une supercapacité seule qu'à l'équilibrage d'un module de plusieurs supercapacités.

D'autre part, on a pris comme exemple dans la description qui précède celui d'une croissance linéaire de l'intensité de dérivation en fonction de la tension aux bornes de la supercapacité, mais il va de soi que l'invention peut être mise en oeuvre plus généralement lorsque l'intensité de dérivation croît continûment en fonction de la tension aux bornes de la supercapacité, du moment que la différence entre la tension de référence et la tension de seuil est inférieure à 200 mV, et le rapport entre l'intensité nominale de dérivation et l'intensité minimale de dérivation est supérieur à 100.

## Revendications

1. Procédé d'équilibrage de supercapacité comprenant la dérivation de l'intensité circulant dans ladite supercapacité à partir d'une tension prédéterminée, dite tension seuil, aux bornes de ladite supercapacité, l'intensité de dérivation étant une fonction de la tension aux bornes de ladite supercapacité qui croît continûment en fonction de ladite tension
**caractérisé en ce que** ladite intensité de dérivation croît entre ladite tension de seuil, pour laquelle ladite intensité de dérivation est appelée intensité minimale de dérivation, et une tension dite de référence, pour laquelle ladite intensité de dérivation est appelée intensité nominale de dérivation, et **en ce que** la différence entre ladite tension de référence et ladite tension de seuil est inférieure à 200mV, et le rapport entre ladite intensité nominale de dérivation et ladite intensité minimale de dérivation est supérieur à 100.

2. Procédé selon la revendication 1, dans lequel ladite intensité de dérivation croît linéairement en fonction de ladite tension aux bornes de ladite supercapacité.

3. Procédé selon l'une des revendications 1 ou 2, dans lequel l'intensité de dérivation est bornée en fonction de la tension aux bornes de la supercapacité.

4. Procédé selon l'une des revendications 1 à 3, dans lequel ladite tension de référence est égale à la tension de fin de charge de ladite supercapacité.

5. Procédé selon l'une des revendications 1 à 3, dans lequel ladite tension de seuil est égale à la tension de fin de charge de ladite supercapacité.

6. Procédé selon l'une des revendications 1 à 5, comprenant en outre le contrôle de l'intensité de charge de ladite supercapacité, en fonction de la tension aux bornes de la supercapacité, par une fonction logique dite de détection de tension susceptible de passer d'un état dit activé à un état dit désactivé lorsque la tension aux bornes de ladite supercapacité dépasse ladite tension de référence, de sorte que l'intensité de charge de ladite supercapacité est alors diminuée, puis de repasser à l'état activé lorsque la tension aux bornes de ladite supercapacité devient inférieure à une tension dite minimale de contrôle.

7. Procédé selon la revendication 6, dans lequel le signal délivré par ladite fonction de détection de tension est un signal sous forme d'hystérésis.

8. Procédé selon l'une des revendications 1 à 7, comprenant en outre le contrôle de l'intensité de charge de ladite supercapacité, en fonction de l'intensité de dérivation, par une fonction logique dite de détection de courant susceptible de passer d'un état dit activé à un état dit désactivé lorsque l'intensité de dérivation est supérieure à ladite intensité nominale de dérivation, de sorte que l'intensité de charge de ladite supercapacité est alors diminuée, puis de repasser à l'état activé lorsque l'intensité de dérivation devient inférieure à une intensité dite minimale de contrôle.

9. Procédé selon la revendication 8, dans lequel le signal délivré par ladite fonction de détection de courant est un hystérésis.

10. Dispositif pour la mise en oeuvre du procédé selon l'une des revendications 1 à 9, comprenant au moins une supercapacité (11) aux bornes de laquelle est monté en parallèle un circuit de dérivation (12) comprenant un amplificateur de puissance contrôlé en courant comprenant un transistor MOSFET, un transistor bipolaire ou un transistor IGBT.

11. Dispositif selon la revendication 10, dans lequel un organe de détection (14) délivrant au moins un signal hystérétique représentatif de la tension aux bornes de ladite supercapacité (dᵥ) et/ou de l'intensité de dérivation (d) est relié audit circuit de dérivation (12) et fournit ledit signal (dᵥ, dᵢ) à des moyens de charge (15) de ladite supercapacité.

12. Dispositif selon la revendication 10, comprenant une pluralité de supercapacités (11₁,..., 11₅) montées en série, un circuit de dérivation (12₁,..., 12₅) étant monté en parallèle aux bornes de chacune desdites supercapacités (11₁,..., 11₅).

13. Dispositif selon les revendications 10 et 11, dans lequel les signaux (dv₁,..., dv₅, di₁,..., di₅) délivrés par l'ensemble desdits organes de détection (12₁,..., 12₅) sont combinés par une fonction ET logique dont la sortie est envoyée auxdits moyens de charge (15).

14. Dispositif selon la revendication 10, comprenant une pluralité de supercapacités montées en série, un circuit de dérivation unique étant monté en parallèle aux bornes de l'ensemble desdites supercapacités.

15. Dispositif selon la revendication 10, comprenant une pluralité de supercapacités montées en parallèle, un circuit de dérivation unique étant monté en parallèle aux bornes de l'ensemble desdites supercapacités.

## Patentansprüche

1. Verfahren zum Ausgleichen von Superkapazitäten, bestehend aus der Abzweigung der in der Superkapazität fließenden Stromstärke ab einer vorbestimmten Klemmenspannung der Superkapazität, genannt Schwellenspannung, wobei die Abzweigungsstromstärke von der Klemmenspannung der Superkapazität abhängig ist, welche entsprechend dieser Spannung kontinuierlich ansteigt,
darin **gekennzeichnet**, dass die Abzweigungsstromstärke zwischen der Schwellenspannung, für welche die Abzweigungsstromstärke minimale Abzweigungsstromstärke genannt wird, und einer sogenannten Referenzspannung, für welche die Abzweigungsstromstärke nominale Abzweigungsstromstärke genannt wird, ansteigt, und dass der Unterschied zwischen der Referenzspannung und der Schwellenspannung kleiner als 200 mV ist und das Verhältnis zwischen der nominalen und der minimalen Abzweigungsstromstärke größer als 100 ist.

2. Verfahren nach Anspruch 1, in welchem die Abzweigungsstromstärke linear entsprechend der Klemmenspannung der Superkapazität ansteigt.

3. Verfahren nach einem der Ansprüche 1 oder 2, in welchem die Abzweigungsstromstärke entsprechend der Klemmenspannung der Superkapazität begrenzt ist.

4. Verfahren nach einem der Ansprüche 1 bis 3, in welchem die Referenzspannung der Spannung des Ladeendes der Superkapazität entspricht.

5. Verfahren nach einem der Ansprüche 1 bis 3, in welchem die Schwellenspannung der Spannung des Ladeendes der Superkapazität entspricht.

6. Verfahren nach einem der Ansprüche 1 bis 5, ferner bestehend aus der Steuerung der Ladeintensität der Superkapazität entsprechend deren Klemmenspannung durch eine logische Funktion der Spannungserkennung, die in der Lage ist, von einem aktivierten in einen deaktivierten Zustand überzugehen, wenn die Klemmenspannung der Superkapazität die Referenzspannung übersteigt, so dass die Ladeintensität der Superkapazität somit verringert ist, dann in den aktivierten Zustand zurückkehrt, wenn die Klemmenspannung der Superkapazität kleiner wird als eine minimale Steuerspannung.

7. Verfahren nach Anspruch 6, in welchem das von der Funktion der Spannungserkennung ausgegebene Signal ein Signal in Form einer Hysterese ist.

8. Verfahren nach einem der Ansprüche 1 bis 7, ferner bestehend aus der Steuerung der Ladeintensität der Superkapazität entsprechend der Abzweigungsstromstärke durch eine logische Funktion der Stromerkennung, die in der Lage ist, von einem aktivierten in einen deaktivierten Zustand überzugehen, wenn die Abzweigungsstromstärke die nominale Abzweigungsstromstärke übersteigt, so dass die Ladeintensität der Superkapazität somit verringert ist, dann in den aktivierten Zustand zurückkehrt, wenn die Abzweigungsstromstärke kleiner wird als eine minimale Steuerungsintensität.

9. Verfahren nach Anspruch 8, in welchem das durch die Funktion der Stromerkennung ausgegebene Signal eine Hysterese ist.

10. Vorrichtung zur Durchführung des Verfahrens nach einem der Ansprüche 1 bis 9, bestehend aus zumindest einer Superkapazität (11), an deren Klemmen ein Nebenkreis (12) parallelgeschaltet ist, der einen stromgesteuerten Leistungsverstärker, bestehend aus einem MOSFET-Transistor, einem bipolaren Transistor oder einem IGBT-Transistor, umfasst.

11. Vorrichtung nach Anspruch 10, in welcher ein Erkennungsorgan (14), welches zumindest ein für die Klemmenspannung der Superkapazität (dᵥ) und/oder die Abzweigungsstromstärke (d) repräsentatives Hysteresesignal ausgibt, mit dem Nebenkreis (12) verbunden ist und das Signal (dᵥ, dᵢ) an Lademittel (15) der Superkapazität ausgibt.

12. Vorrichtung nach Anspruch 10, bestehend aus mehreren in Serie geschalteten Superkapazitäten (11₁, ..., 11₅), einem Nebenkreis (12₁, ..., 12₅), der mit den Klemmen jeder Superkapazität (11₁, ..., 11₅) parallelgeschaltet ist.

13. Verfahren nach den Ansprüchen 10 und 11, in welchem die durch die Gesamtheit der Erkennungsorgane (12₁, ..., 12₅) ausgegebenen Signale (dv₁, ..., dv₅, di₁, ..., di₅) durch eine logische UND-Funktion verbunden sind, deren Ausgabe an die Lademittel (15)gesendet wird.

14. Vorrichtung nach Anspruch 10, bestehend aus mehreren in Serie geschalteten Superkapazitäten, einem einzigen Nebenkreis, der mit den Klemmen aller Superkapazitäten parallelgeschaltet ist.

15. Vorrichtung nach Anspruch 10, bestehend aus mehreren parallelgeschalteten Superkapazitäten, einem einzigen Nebenkreis, der mit den Klemmen aller Superkapazitäten parallelgeschaltet ist.

## Claims

1. A supercapacitor balancing method including bypassing the current flowing in said supercapacitor from a predetermined threshold voltage at the terminals of said supercapacitor, the bypass current being a function of the voltage at the terminals of said supercapacitor and increasing continuously as a function of said voltage, **characterized in that** said bypass current increases between said threshold voltage, for which said bypass current constitutes a minimum bypass current, and a reference voltage, for which said bypass current constitutes a nominal bypass current, and **in that** the difference between said reference voltage and said threshold voltage is less than 200 mV and the ratio between said nominal bypass current and said minimum bypass current is greater than 100.

2. A method according to claim 1 wherein said bypass current increases as a linear function of said voltage at the terminals of said supercapacitor.

3. A method according to claim 1 or2 wherein the bypass current is limited as a function of the voltage at the terminals of the supercapacitor.

4. A method according to one of claims 1 to 3, wherein said reference voltage is equal to the end of charging voltage of said supercapacitor.

5. A method according to one of claims 1 to 3, wherein said threshold voltage is equal to the end of charging voltage of said supercapacitor.

6. A method according to one of claims 1 to 5, further including monitoring of the charging current of said supercapacitor as a function of the voltage at the terminals of the supercapacitor by a voltage detector logic function adapted to change from an activated state to a deactivated state if the voltage at the terminals of said supercapacitor exceeds said reference voltage, with the result that the supercapacitor charging current is then reduced, and then to return to the activated state if the voltage at the terminals of said supercapacitor falls below a minimum monitoring voltage.

7. A method according to claim 6, wherein the signal delivered by said voltage detector function is a hysteresis signal.

8. A method according to one of claims 1 to 7, further including monitoring of the charging current of said supercapacitor as a function of the bypass current by a current detector logic function adapted to change from an activated state to a deactivated state if the bypass current is greater than said nominal bypass current, with the result that the charging current of said supercapacitor is then reduced, and then to return to the activated state if the bypass current falls below a minimum monitoring current.

9. A method according to claim 8, wherein the signal delivered by said current detector function is a hysteresis signal.

10. A device for implementing the method according to one of claims 1 to 9, including at least one supercapacitor (11) whose terminals are connected in parallel with a bypass circuit (12) including a current control power amplifier including a MOSFET, a bipolar transistor or an IGBT.

11. A device according to claim 10, wherein a detector unit (14) delivering at least one hysteresis signal representing the voltage at the terminals of said supercapacitor (dᵥ) and/or the bypass current (d) [sic] is connected to said bypass circuit (12) and supplies said signal (dᵥ, dᵢ) to charging means (15) for charging said supercapacitor.

12. A device according to claim 10, including a plurality of supercapacitors (11₁, ..., 11₅) connected in series and a respective bypass circuit (12₁, ..., 12₅) connected in parallel with the terminals of each of said supercapacitors (11₁, ..., 11₅).

13. A device according to claims 10 and 11, wherein the signals (dv₁, ..., dv₅, di₁, ..., di₅) delivered by all of said detector units (12₁, ..., 12₅) are combined by an AND logic function whose output is sent to said charging means (15).

14. A device according to claim 10, including a plurality of supercapacitors connected in series and a single bypass circuit connected in parallel with the terminals of the set of said supercapacitors.

15. A device according to claim 10, including a plurality of supercapacitors connected in parallel and a single bypass circuit connected in parallel with the terminals of the set of said supercapacitors.
